# EUROPÄISCHE PATENTSCHRIFT

(11) **EP 3 274 969 B1**
(45) Veröffentlichungstag und Bekanntmachung des Hinweises auf die Patenterteilung: **06.11.2019**
(21) Anmeldenummer: 16706656.2
(22) Anmeldetag: 29.02.2016
(51) Int. Cl.: G01S 17/10, G07D 9/00, G07D 5/02

(54) **VORRICHTUNG ZUR BESTIMMUNG DES FÜLLSTANDS VON MÜNZTUBEN**
DEVICE FOR DETERMINING THE FILL LEVEL OF COIN TUBES
DISPOSITIF POUR DÉTERMINER LE NIVEAU DE REMPLISSAGE DE TUBES CONTENANT DES PIÈCES DE MONNAIE

(30) Priorität: 24.03.2015 DE 202015101489 U
(43) Veröffentlichungstag der Anmeldung: 31.01.2018
(73) Patentinhaber: Crane Payment Innovations Ltd., Royton Oldham OL2 6JZ (GB)
(72) Erfinder: SCHNEIDER, Thorsten, 21641 Apensen (DE)
(74) Vertreter: Peterreins Schley
(86) Internationale Anmeldenummer: PCT/EP2016/054187
(87) Internationale Veröffentlichungsnummer: WO 2016/150655

(56) Entgegenhaltungen:
- EP-A1- 1 990 778
- EP-A1- 2 159 760
- EP-A2- 2 043 058
- WO-A1-01/67185
- US-A- 4 774 841
- US-A1- 2005 118 941

## Beschreibung

Die Erfindung betrifft eine Vorrichtung und ein Verfahren zur Bestimmung des Füllstands mindestens einer mit Münzen befüllbaren Münztube. Die Erfindung betrifft weiterhin eine Münzspeichervorrichtung zum Speichern und/oder Auszahlen von Münzen sowie ein Verfahren zur Bestimmung des Füllstands mindestens einer mit Münzen befüllbaren Münztube.

Beispielsweise Geldwechsler weisen in der Regel sogenannte Münztuben auf, in denen in dem Geldwechsler gespeicherte und von dem Geldwechsler auszuzahlende Münzen übereinander gestapelt gespeichert sind. Dabei ist für jeden Münztyp eine Münztube vorgesehen. Es besteht die Notwendigkeit, die Anzahl von Münzen in den Münztuben, also den Füllstand der Münztuben, im laufenden Betrieb zu ermitteln. Es ist bekannt, dies durch Vorsehen einer oder mehrerer Lichtschranken zu erreichen, die bei Überschreiten einer oder mehrerer Grenzhöhen in den Münztuben durch den Münzstapel unterbrochen werden. Nachteilig bei dieser Art der Füllstandsermittlung ist, dass nur diskrete Füllstandswerte ermittelt werden können. Befindet sich der Münzstapel mit seiner Höhe zwischen zwei Lichtschranken, so werden die zwischen den Lichtschranken befindlichen Münzen nicht erfasst. Damit bietet diese Technologie in der Praxis nicht immer eine ausreichende Genauigkeit.

Weiterhin ist für den angegebenen Zweck die Verwendung von Schall- bzw. Ultraschallsensoren bekannt, die die Laufzeit eines Ultraschallsignals von einem Sender bis zu der obersten Münze eines Münzstapels und zurück zu einem Empfänger messen. Anhand dieser Laufzeitmessung wird der Abstand zwischen dem Ultraschallsender bzw. -empfänger und der obersten Münze berechnet, woraus wiederum - bei bekannter Münzdicke - auf die Höhe des Münzstapels und damit auf die Anzahl von in der Münztube befindlichen Münzen geschlossen werden kann. Nachteilig an dieser Technologie ist die starke Abhängigkeit der Schallgeschwindigkeit und damit des Messergebnisses von der vorherrschenden Temperatur und Feuchtigkeit. Hinzu kommt, dass derartige Ultraschallsensoren einen großen Blindbereich haben, in dem aufgrund einer Überlappung der ausgesendeten und reflektierten Schallsignale keine zuverlässige Messung möglich ist. Dieser Blindbereich befindet sich in der Nähe des Schallsenders bzw. Schallempfängers. In der Praxis ist für eine zuverlässige Messung daher ein erheblicher Mindestabstand zwischen den Schallsendern bzw. Schallempfängern und der obersten Münze eines Münzstapels erforderlich, beispielsweise ein Abstand von ca. 2 cm. Dies wiederum begrenzt bei vorgegebenem Bauraum der Vorrichtung die Kapazität der Münztuben.

Aus US 2005/0118941 A1 ist ein Münzausgabegerät bekannt mit einem drehenden Karussell, auf dem eine Mehrzahl von Münztuben angeordnet ist. Durch Drehen des Karussells können die Münztuben nacheinander zu einem Sensor, wie einem Ultraschall- oder Lasersensor, ausgerichtet werden. Ein Mikroprozessor ermittelt die Höhe eines Münzstapels in der jeweiligen Münztube anhand des Zeitunterschieds zwischen dem Aussenden und dem Empfangen eines Messsignals durch den Sensor. Weitere Vorrichtungen zur Bestimmung des Füllstands einer mit Münzen befüllten Münztube sind bekannt aus US 4 774 841 A, WO 01/67185 A1 und EP 2 159 760 A1. Aus EP 2 043 058 A2 ist darüber hinaus eine Banknoten-Identifikationsvorrichtung bekannt, bei der ein Einführschlitz zum Einführen von Banknoten beleuchtet wird. Die Beleuchtung erfolgt unter Verwendung von Leuchtdioden und Lichtleitern.

Ausgehend von dem erläuterten Stand der Technik liegt der Erfindung die Aufgabe zugrunde, eine Vorrichtung, eine Münzspeichervorrichtung und ein Verfahren der eingangs genannten Art bereitzustellen, mit denen eine genaue und zuverlässige Bestimmung des Füllstands von Münztuben bei maximierter Füllkapazität der Münztuben möglich ist.

Die Erfindung löst die Aufgabe durch die Gegenstände der unabhängigen Ansprüche 1 und 8. Vorteilhafte Ausgestaltungen finden sich in den abhängigen Ansprüchen, der Beschreibung und den Figuren.

Die Erfindung löst die Aufgabe einerseits durch eine Vorrichtung zur Bestimmung des Füllstands mindestens einer mit Münzen befüllbaren Münztube, umfassend mindestens einen optischen Strahlungssender, der in einer definierten Position relativ zu der mindestens einen Münztube derart angeordnet ist, dass von dem optischen Strahlungssender ausgesendete optische Strahlung auf in die mindestens eine Münztube gefüllte Münzen trifft und von in die mindestens eine Münztube gefüllten Münzen reflektiert wird, weiter umfassend mindestens einen optischen Strahlungssender ausgesendete und von in die mindestens eine Münztube gefüllten Münzen reflektierte optische Strahlung von dem mindestens einen optischen Strahlungsempfänger als Messsignal empfangen wird, und umfassend eine Steuer- und Auswerteeinrichtung, die mit dem mindestens einen optischen Strahlungssender und dem mindestens einen optischen Strahlungsempfänger verbunden ist, und die dazu ausgebildet ist, den mindestens einen optischen Strahlungssender zum Aussenden optischer Strahlung anzusteuern und anhand einer Zeitdauer zwischen dem Aussenden optischer Strahlung und dem Empfang des entsprechenden Messsignals durch den mindestens einen optischen Empfänger den Füllstand der mindestens einen Münztube mit Münzen zu bestimmen.

Andererseits löst die Erfindung die Aufgabe durch ein Verfahren zur Bestimmung des Füllstands mindestens einer mit Münzen befüllbaren Münztube, bei dem von einem in einer definierten Position relativ zu der mindestens einen Münztube angeordneten optischen Strahlungssender optische Strahlung auf in die mindestens eine Münztube gefüllte Münzen ausgesendet und von in die mindestens eine Münztube gefüllten Münzen reflektiert wird, bei dem weiterhin von mindestens einem in einer definierten Position relativ zu der mindestens einen Münztube angeordneten optischen Strahlungsempfänger die von dem mindestens einen optischen Strahlungssender ausgesendete und von in die mindestens eine Münztube gefüllten Münzen reflektierte optische Strahlung als Messsignal empfangen wird, und bei dem anhand einer Zeitdauer zwischen dem Aussenden optischer Strahlung durch den mindestens einen optischen Strahlungssender und dem Empfang des entsprechenden Messsignals durch den mindestens einen optischen Empfänger der Füllstand der mindestens einen Münztube mit Münzen bestimmt wird.

Erfindungsgemäß erfolgt die Bestimmung des Füllstands der beispielsweise hohlzylindrischen Münztuben unter Verwendung mindestens eines optischen Strahlungssenders und mindestens eines optischen Strahlungsempfängers. Der mindestens eine optische Strahlungssender und der mindestens eine optische Strahlungsempfänger sind jeweils in einer definierten Position relativ zu der zu vermessenden Münztube angeordnet. Die Abstände des mindestens einen optischen Strahlungssenders und des mindestens einen optischen Strahlungsempfängers zum Boden der mindestens einen Münztube sind also bekannt. In einfachster Ausführung sind diese Abstände für den Strahlungssender und den Strahlungsempfänger gleich. Somit ist auch die Zeitdauer bekannt, die von dem optischen Strahlungssender ausgesendete optische Strahlung bei einer Reflektion an dem Boden der leeren Münztube für ihren Weg zurück zum optischen Strahlungsempfänger brauchen würde.

Bei mit Münzen befüllter Münztube ist die von der erfindungsgemäßen Steuer- und Auswerteeinrichtung ermittelte Zeitdauer für diese Strecke aufgrund der Reflektion an in der Münztube befindlichen gestapelten Münzen kürzer. Gleichzeitig ist die Dicke der in die jeweilige Münztube gefüllten Münzen bekannt. So wird bei mehreren Münztuben in jede Münztube nur ein Münztyp gefüllt. Daher kann aus der Zeitdauer, die von dem mindestens einen Strahlungssender ausgesendete Strahlung bei einer Reflektion an Münzen zurück zum Strahlungsempfänger benötigt, zuverlässig auf den Abstand des Strahlungssenders bzw. Strahlungsempfängers zu der obersten Münze in der Münztube und damit auf den Füllstand der Münztube geschlossen werden.

Durch die erfindungsgemäße Laufzeitmessung (Time of Flight-Messung) ist eine absolute Abstandsmessung von den optischen Sensoren zu der obersten Münze der jeweiligen Münztube möglich. Eine Laufzeitmessung von Lichtpulsen ist an sich bekannt. Der mindestens eine Strahlungssender sendet beispielsweise einen kurzen Lichtpuls aus, der auf das zu vermessende Objekt, vorliegend die Oberseite der obersten Münze in einer Münztube trifft. Das von dieser Münze reflektierte Licht gelangt zu dem mindestens einen Strahlungsempfänger, der ein entsprechendes Messsignal registriert. Aus der Laufzeitmessung können der Abstand zu der obersten Münze und damit der Füllstand der Münztube bestimmt werden. Grundsätzlich problematisch bei der Verwendung von Licht ist die im Vergleich zu beispielsweise Schallwellen sehr hohe Lichtgeschwindigkeit. Aufgrund der bei der erfindungsgemäßen Anwendung relativ geringen Messabstände müssen hoch präzise und schnelle Sensoren zum Einsatz kommen. Solche Sensoren sind mittlerweile allerdings zu vertretbaren Kosten verfügbar.

Vorteilhaft ist bei der erfindungsgemäßen Laufzeitmessung mittels optischer Strahlung die Unabhängigkeit von äußeren Einflüssen, wie Temperatur, Feuchtigkeit, aber auch Reflektivität der Münzen und Umgebungslicht. Somit kann unabhängig von äußeren Einflüssen der Füllstand der jeweiligen Münztube jederzeit präzise und zuverlässig ermittelt werden. Ein relevanter Blindbereich, wie bei Ultraschallsensoren, existiert ebenfalls nicht, so dass die Füllkapazität der Münztuben maximiert werden kann. Gleichzeitig ist erfindungsgemäß sichergestellt, dass jede Münze in der Münztube in der Messung berücksichtigt wird.

Soweit in der vorliegenden Anmeldung von Münzen bzw. Münztuben gesprochen wird, umfasst dies sowohl im regulären Zahlungsverkehr genutzte (Metall-)Münzen als auch Sammlermünzen und beispielsweise im Gaming-Bereich in Spielautomaten oder Spielcasinos eingesetzte Wertmarken (Tokens), insbesondere Metall- oder Kunststoffwertmarken.

Der mindestens eine optische Strahlungssender, der mindestens eine Strahlungsempfänger und die Steuer- und Auswerteeinrichtung können getrennte Bauteile sein, wobei der mindestens eine optische Strahlungssender und der mindestens eine Strahlungsempfänger durch geeignete Leitungen oder ähnliches mit der Steuer- und Auswerteeinrichtung verbunden sind. Es ist aber auch möglich, dass der mindestens eine optische Strahlungssender, der mindestens eine Strahlungsempfänger und die Steuer- und Auswerteeinrichtung sämtlich oder teilweise in ein gemeinsames Bauteil integriert sind, in welchem dann auch die Verbindung des mindestens einen optischen Strahlungssenders und des mindestens einen Strahlungsempfängers mit der Steuer- und Auswerteeinrichtung realisiert ist. Die in dieses gemeinsame Bauteil integrierte Steuer- und Auswerteeinrichtung kann dann direkt den ermittelten Abstand zu der obersten Münze oder den Füllstand ausgeben, beispielsweise an eine weitere Auswerteeinrichtung.

Nach einer besonders praxisgemäßen Ausgestaltung kann der mindestens eine optische Strahlungssender mindestens ein Laser und der mindestens eine optische Strahlungsempfänger mindestens ein Laserdetektor sein. Beispielsweise können Diodenlaser zum Einsatz kommen. Sie zeichnen sich durch eine besondere Kompaktheit aus und sind gleichzeitig kostengünstig. Gleiches gilt für diesbezüglich geeignete Laserdetektoren. Außerdem ist bei Verwendung solcher Strahlungssender bzw. Strahlungsempfänger auch bei den erfindungsgemäß zu vermessenden geringen Abständen eine zuverlässige Abstandsmessung möglich. Beispielsweise kann es sich bei dem verwendeten Laser um einen als Oberflächenemitter ausgebildeten Halbleiterlaser handeln (VCSEL-Vertical Cavitiy Surface Emitting Laser).

Nach einer weiteren Ausgestaltung kann die Steuer- und Auswerteeinrichtung den mindestens einen optischen Strahlungssender ein oder mehrmals zum Aussenden optischer Strahlungspulse ansteuern. Der Strahlungspuls wird dann nach einer Reflektion an der obersten Münze einer Münztube von dem optischen Strahlungsempfänger empfangen und die Steuer- und Auswerteeinrichtung ermittelt aus der Laufzeitmessung den Abstand zu der obersten Münze und daraus den Füllstand der Münztube. Der optische Strahlungssender kann zum Beispiel in regelmäßigen Abständen und/oder immer nach einem Befüllvorgang der jeweiligen Münztube einen Strahlungspuls zur Ermittlung des Füllstands aussenden. Sind mehrere Münztuben vorgesehen, wie unten noch näher erläutert werden wird, kann beispielsweise bei einem Befüllvorgang einer der Münztuben nur der der jeweiligen Münztube zugeordnete Strahlungssender zum Aussenden eines Strahlungspulses angesteuert werden. Es ist aber auch möglich, generell bei einem Befüllvorgang einer der Münztuben sämtliche Strahlungssender zum Aussenden eines Strahlungspulses anzusteuern.

Nach einer weiteren Ausgestaltung kann vorgesehen sein, dass der mindestens eine optische Strahlungssender derart relativ zu der mindestens einen Münztube angeordnet ist, dass die von dem mindestens einen optischen Strahlungssender ausgesendete optische Strahlung im Wesentlichen in Axialrichtung der mindestens einen Münztube auf in die Münztube gefüllte Münzen trifft, und dass der mindestens eine optische Strahlungsempfänger derart relativ zu der mindestens einen Münztube angeordnet ist, dass die von den in die Münztube gefüllten Münzen reflektierte optische Strahlung im Wesentlichen in Axialrichtung der mindestens einen Münztube auf den optischen Strahlungsempfänger trifft. Die optischen Strahlengänge vom Strahlungssender zu den Münzen und von den Münzen zurück zum Strahlungsempfänger sind dann im Wesentlichen parallel zueinander und verlaufen im Wesentlichen in Axialrichtung der jeweiligen Münztube. Insbesondere trifft von dem Strahlungssender ausgesendete Strahlung von oben auf die Oberseite der obersten Münze einer jeweiligen Münztube. Es ergibt sich eine besonders einfache Auswertung der Laufzeitmessung. Insbesondere können der optische Strahlungssender und der optische Strahlungsempfänger (jeweils) so angeordnet sein, dass sie den gleichen Abstand zum Boden der jeweiligen Münztube bzw. zur Oberfläche von in die jeweilige Münztube gestapelten Münzen besitzen.

Nach einer weiteren Ausgestaltung kann vorgesehen sein, dass die Vorrichtung eine Mehrzahl optischer Strahlungssender und eine Mehrzahl optischer Strahlungsempfänger umfasst, wobei jeweils ein Paar aus Strahlungssender und Strahlungsempfänger jeweils einer von mehreren Münztuben zugeordnet ist, wobei die optischen Strahlungssender jeweils in einer definierten Position relativ zu der jeweiligen Münztube derart angeordnet sind, dass von den optischen Strahlungssendern jeweils ausgesendete optische Strahlung auf in die jeweilige Münztube gefüllte Münzen trifft und von in die jeweilige Münztube gefüllten Münzen reflektiert wird, und wobei die optischen Strahlungsempfänger jeweils in einer definierten Position relativ zu der jeweiligen Münztube derart angeordnet sind, dass von dem jeweiligen optischen Strahlungssender ausgesendete und von in die jeweilige Münztube gefüllten Münzen reflektierte optische Strahlung von dem jeweiligen optischen Strahlungsempfänger als Messsignal empfangen wird, und wobei die Steuer- und Auswerteeinrichtung mit jedem Strahlungssender und jedem Strahlungsempfänger verbunden ist und dazu ausgebildet ist, die optischen Strahlungssender jeweils zum Aussenden optischer Strahlung anzusteuern und anhand einer Zeitdauer zwischen dem Aussenden optischer Strahlung durch den jeweiligen optischen Strahlungssender und dem Empfang des entsprechenden Messsignals durch den jeweiligen optischen Empfänger den Füllstand der jeweiligen Münztube mit Münzen zu bestimmen.

Diese Ausgestaltung wurde oben bereits angesprochen. Es ist dabei ein Paar aus Strahlungssender und Strahlungsempfänger jeweils einer Münztube zugeordnet. Für jede Münztube wird dann die erfindungsgemäße Laufzeitmessung mit dem jeweiligen Paar aus Strahlungssender und Strahlungsempfänger durchgeführt und daraus auf den jeweiligen Abstand der Sensoren zu der obersten Münze in der Münztube und damit auf den Füllstand der jeweiligen Münztube geschlossen. Die Strahlungssender und Strahlungsempfänger können bei dieser Ausgestaltung insbesondere in der oben erläuterten Weise ausgestaltet bzw. angeordnet sein.

Erfindungsgemäß ist für eine Mehrzahl der Münztuben oder sämtliche der Münztuben ein gemeinsamer optischer Strahlungssender und/oder ein gemeinsamer optischer Strahlungsempfänger vorgesehen, wobei der gemeinsame optische Strahlungssender bzw. der gemeinsame optische Strahlungsempfänger über einen Lichtwellenleiter mit den Münztuben optisch verbunden ist. Auf diese Weise kann die oben erläuterte Füllstandsermittlung bei mehreren Münztuben unter Verwendung beispielsweise nur eines optischen Strahlungssenders und/oder nur eines optischen Strahlungsempfängers erfolgen. Dies vereinfacht den konstruktiven Aufbau.

Gerade bei der Verwendung eines gemeinsamen optischen Strahlungssenders für alle Münztuben bei gleichzeitigem Vorsehen jeweils eines optischen Strahlungsempfängers über jeder Münztube kann die Steuerung bzw. Auswertung der empfangenen Signale erfolgen wie oben erläutert. Bei Verwendung eines gemeinsamen optischen Strahlungsempfängers bei gleichzeitigem Vorsehen jeweils eines optischen Strahlungssenders über jeder Münztube muss zur eindeutigen Zuordnung der von dem gemeinsamen Strahlungsempfänger empfangenen Signale die Steuerung bzw. Auswertung angepasst werden. Beispielsweise ist es dann denkbar, die den Münztuben zugeordneten Strahlungssender zeitlich versetzt anzusteuern, so dass anhand des Zeitpunkts des vom Strahlungsempfänger empfangenen Messsignals auf die jeweils untersuchte Münztube geschlossen werden kann. Auch denkbar wäre es, dass die das von den Münzen reflektierte Signal zu dem Strahlungsempfänger leitenden Lichtwellenleiter dieses Messsignal jeweils auf unterschiedliche Bereiche der Messfläche des Strahlungsempfängers leiten. Es kann dann anhand der örtlichen Verteilung der Messsignale eine eindeutige Zuordnung der Messsignale zu den untersuchten Münztuben erfolgen.

Die Erfindung löst die Aufgabe auch durch eine Münzspeichervorrichtung zum Speichern und/oder Auszahlen von Münzen, umfassend mehrere mit Münzen befüllbare bzw. befüllte Münztuben und umfassend eine erfindungsgemäße Vorrichtung zur Bestimmung des Füllstands der einen oder der mehreren Münztuben. Bei der Münzspeichervorrichtung kann es sich insbesondere um einen Geldwechsler handeln, der beispielsweise in Bezahlautomaten zum Einsatz kommt. Er besitzt einen Münzeinlass, durch den Münzen einer Münzprüfeinrichtung des Geldwechslers zugeführt werden. In der Münzprüfeinrichtung werden die Echtheit und der Typ der jeweils zugeführten Münzen bestimmt. Abhängig von dem Prüfergebnis werden die Münzen dann in die für den jeweiligen Münztyp vorgesehenen Münztuben gefüllt oder bei fehlender Echtheit einem Auslass zugeführt. Die Münztuben befinden sich dabei in der Regel unterhalb der Münzprüfeinrichtung. Die erfindungsgemäßen optischen Strahlungssender und optischen Strahlungsempfänger sowie die Steuer- und Auswerteeinrichtung können dann in die Münzprüfeinrichtung integriert sein.

Nach einer diesbezüglichen weiteren Ausgestaltung kann vorgesehen sein, dass die Steuer- und Auswerteeinrichtung bei Vorhandensein einer Mehrzahl von Münztuben und Paaren von Strahlungssendern und Strahlungsempfängern anhand von für die einzelnen Münztuben bestimmten Füllständen eine Auszahlung von Münzen aus den Münztuben derart ausführt, dass die Füllstände in den Münztuben einen jeweils vorgegebenen Minimalwert nicht unterschreiten. Es erfolgt also ein intelligentes Münzmanagement aufgrund der Messergebnisse der erfindungsgemäßen Sensorik. Durch Ausgabe bestimmter Münzen kann der Münzwechsler die Füllstände der einzelnen Münztuben in gewissen Grenzen so beeinflussen, dass jederzeit von jedem Münztyp ausreichend Münzen vorhanden sind. Unterschreitet die Anzahl von Münzen in einer der Münztuben dennoch den vorgegebenen Minimalwert, kann der Münzwechsler ein Warnsignal ausgeben.

Das erfindungsgemäße Verfahren kann insbesondere mit der erfindungsgemäßen Vorrichtung durchgeführt werden. Entsprechend kann die erfindungsgemäße Vorrichtung insbesondere zur Durchführung des erfindungsgemäßen Verfahrens geeignet und ausgebildet sein.

Ausführungsbeispiele der Erfindung werden nachfolgend anhand von Figuren näher erläutert. Es zeigen schematisch:
- Fig. 1: eine Darstellung einer Vorrichtung zur Erläuterung des erfindungsgemäßen Messprinzips in einer Schnittansicht, und
- Fig. 2: eine Münzspeichervorrichtung zum Speichern und/oder Auszahlen von Münzen in einem zur Veranschaulichung demontierten Zustand in einer teilweise transparenten perspektivischen Darstellung.

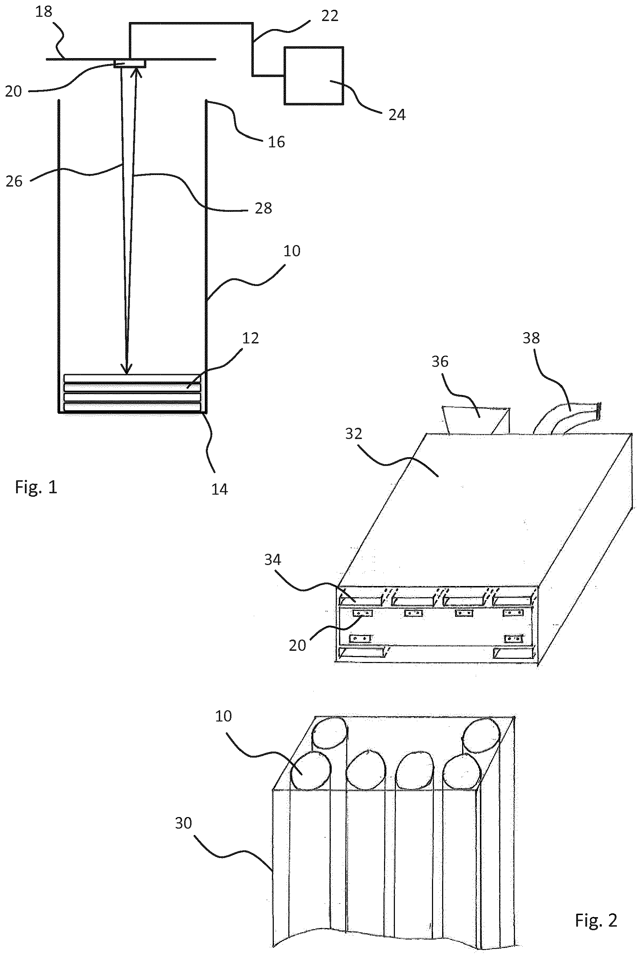

Soweit nichts anderes angegeben ist, bezeichnen in den Figuren gleiche Bezugszeichen gleiche Gegenstände. In Fig. 1 ist bei dem Bezugszeichen 10 eine Münztube gezeigt, die beispielsweis in einer Münzspeichervorrichtung zum Speichern und/oder Auszahlen von Münzen, wie in Fig. 2 gezeigt, zum Einsatz kommen kann. In der Münztube 10 befinden sich mehrere, in dem dargestellten Beispiel vier Münzen 12, insbesondere auf dem Boden 14 der Münztube 10 gestapelt. Oberhalb des oben offenen Endes 16 der Münztube 10 befindet sich an einer Halteplatte 18 gehalten eine optische Sensorik 20. Die optische Sensorik 20 weist einen optischen Strahlungssender, vorliegend einen Laser, insbesondere einen Halbleiterlaser wie einen VCSEL, und einen optischen Strahlungsempfänger, vorliegend einen geeigneten Laserdetektor, auf. Über eine Leitung 22 sind der optische Strahlungssender und der optische Strahlungsempfänger mit einer Steuer- und Auswerteeinrichtung 24 der Vorrichtung verbunden.

Im Betrieb steuert die Steuer- und Auswerteeinrichtung 24 den optischen Strahlungssender ein oder mehrmals zum Aussenden eines optischen Strahlungsimpulses an. Die von dem optischen Strahlungssender ausgesandte optische Strahlung trifft im Wesentlichen in Axialrichtung der Münztube 10 auf die Oberseite der obersten in die Münztube 10 gefüllten Münze 12, wie in Fig. 1 durch den Pfeil 26 veranschaulicht. Die Oberseite der obersten Münze 12 reflektiert die optische Strahlung, so dass diese wiederum im Wesentlichen in Axialrichtung der Münztube 10 zurück zu dem optischen Strahlungsempfänger gelangt, wie in Fig. 1 durch den Pfeil 28 veranschaulicht. Das von dem Strahlungsempfänger empfangene Messsignal wird über die Leitung 22 an die Steuer- und Auswerteeinrichtung 24 geleitet. Die Steuer- und Auswerteeinrichtung 24 ermittelt anhand der Laufzeit der von dem optischen Strahlungssender ausgesandten optischen Strahlung zu der Oberseite der obersten Münze 12 und zurück zu dem optischen Strahlungsempfänger den Abstand der Sensorik 20 zu der Oberseite der obersten Münze 12 in der Münztube 10. Aufgrund der in Bezug auf die Münztube 10 definierten Position der Sensorik 20 und des bekannten Abstandes zu der Unterseite 14 der Münztube 10 kann aus dem messtechnisch ermittelten Abstand bei bekannter Dicke der in die Münztube 10 gefüllten Münzen 12 auf den Füllstand der Münztube 10 mit Münzen geschlossen werden. Dies erfolgt vorliegend durch die Steuer- und Auswerteeinrichtung 24.

In Fig. 2 ist eine erfindungsgemäße Münzspeichervorrichtung zum Speichern und Auszahlen von Münzen gezeigt, insbesondere ein Geldwechsler, wie er beispielsweise in Bezahlautomaten zum Einsatz kommt. Die in Fig. 2 gezeigte Münzspeichervorrichtung besteht im Wesentlichen aus zwei Gehäuseteilen, die in Fig. 2 aus Gründen der Veranschaulichung demontiert gezeigt sind. In einem unteren Gehäuseteil 30 sind in dem gezeigten Beispiel sechs Münztuben 10 aufrechtstehend verteilt angeordnet. Die Münztuben 10 sind jeweils beispielsweise so ausgestaltet wie in Fig. 1 gezeigt und werden mit unterschiedlichen Münztypen befüllt, wobei in jede der Münztuben 10 in Fig. 2 jeweils nur ein Münztyp gefüllt wird, wie dies in Fig. 1 anhand einer Münztube 10 gezeigt ist.

In einem Gehäuseoberteil 32 der Münzspeichervorrichtung befindet sich eine Münzprüfeinrichtung. Im Betrieb wird das Gehäuseoberteil 32 mit der in Fig. 2 stirnseitig erkennbaren Unterseite auf die Oberseite des Gehäuseunterteils 30 aufgesetzt. An der Unterseite des Gehäuseoberteils 32 befindet sich eine Mehrzahl von Münzschlitzen, vorliegend sechs Münzschlitzen 34. Bei auf das Gehäuseunterteil 30 aufgesetztem Gehäuseoberteil 32 ist jeweils ein Münzschlitz 34 zu einer der Münztuben 10 ausgerichtet. An seiner Oberseite weist das Gehäuseoberteil 32 einen Münzeinlass 36 auf, durch den der Münzspeichervorrichtung und insbesondere zunächst der in dem Gehäuseoberteil 32 angeordneten Münzprüfeinrichtung Münzen zugeführt werden. Die Münzprüfeinrichtung untersucht die zugeführten Münzen auf Echtheit und Münztyp und leitet diese - bei vorliegender Echtheit - abhängig von ihrem Typ über die Münzschlitze 34 jeweils einer der Münztuben 10 zu. Die Münzschlitze 34 bilden also Sortierausgänge der Münzprüfeinrichtung.

An der Oberseite des Gehäuseoberteils 32 befindet sich außerdem noch ein beispielsweise manuell betätigbarer Rückgabehebel 38, über den beispielsweise bei einer Münzblockade der Münzprüfeinrichtung zugeführte Münzen ausgegeben werden können. Jeweils benachbart zu einem der Münzschlitze 34 befindet sich jeweils eine Sensorik 20, wie sie in Fig. 1 gezeigt und anhand der Fig. 1 beispielshaft erläutert wurde. Insbesondere umfasst jede der Sensoriken 20 in Fig. 2 einen optischen Strahlungsempfänger und einen optischen Strahlungssender, insbesondere einen Laser und einen Laserdetektor, wie oben beispielhaft erläutert. Im auf das Gehäuseunterteil 30 bestimmungsgemäß aufgesetzten Zustand des Gehäuseoberteils 32 sind die Sensoriken 20 bzw. die Strahlungssender und Strahlungsempfänger jeweils so zu einer der Münztuben 10 ausgerichtet, wie dies in Fig. 1 dargestellt ist. Insbesondere ergeben sich für jede der Sensoriken 20 und Münztuben 10 jeweils die in Fig. 1 anhand einer Sensorik 20 und einer Münztube 10 dargestellten optischen Strahlengänge 26, 28. Jede der Sensoriken 20 bzw. jeder der Strahlungssender und Strahlungsempfänger der Münzspeichervorrichtung in Fig. 2 ist dabei mit der Steuer- und Auswerteeinrichtung 24 verbunden, die in dem in Fig. 2 gezeigten Ausführungsbeispiel innerhalb des Gehäuseoberteils 32 angeordnet ist.

Im Betrieb steuert die Steuer- und Auswerteeinrichtung 24 die Strahlungssender der Sensoriken 20 jeweils zum Aussenden eines oder mehrerer Strahlungspulse an. Die von den jeweiligen Strahlungsempfängern entsprechend empfangenen Messsignale werden wiederum der Steuer- und Auswerteeinrichtung 24 zugeleitet, wobei die Steuer- und Auswerteeinrichtung 24 daraus jeweils den Abstand der Sensorik 20 bzw. der Strahlungssender und Strahlungsempfänger zu der obersten in die jeweilige Münztube 10 gefüllten Münze ermittelt und daraus jeweils den Füllstand der Münztuben 10 bestimmt.

Es ist dabei beispielsweise möglich, dass die Steuer- und Auswerteeinrichtung 24 sämtliche Strahlungssender jeweils nach einem Befüllvorgang mindestens einer der Münztuben 10 zum Aussenden eines Strahlungspulses ansteuert. Es ist jedoch auch denkbar, dass die Steuer- und Auswerteeinrichtung 24 nur den der jeweils befüllten Münztube 10 zugeordneten Strahlungssender zum Aussenden eines Strahlungspulses ansteuert.

## Patentansprüche

1. Vorrichtung zur Bestimmung des Füllstands mindestens einer mit Münzen befüllbaren Münztube, umfassend mindestens einen optischen Strahlungssender, der in einer definierten Position relativ zu der mindestens einen Münztube (10) derart angeordnet ist, dass von dem optischen Strahlungssender ausgesendete optische Strahlung auf in die mindestens eine Münztube (10) gefüllte Münzen (12) trifft und von in die mindestens eine Münztube (10) gefüllten Münzen (12) reflektiert wird, weiter umfassend mindestens einen optischen Strahlungsempfänger, der in einer definierten Position relativ zu der mindestens einen Münztube (10) derart angeordnet ist, dass von dem mindestens einen optischen Strahlungssender ausgesendete und von in die mindestens eine Münztube (10) gefüllten Münzen (12) reflektierte optische Strahlung von dem mindestens einen optischen Strahlungsempfänger als Messsignal empfangen wird, und umfassend eine Steuer- und Auswerteeinrichtung (24), die mit dem mindestens einen optischen Strahlungssender und dem mindestens einen optischen Strahlungsempfänger verbunden ist, und die dazu ausgebildet ist, den mindestens einen optischen Strahlungssender zum Aussenden optischer Strahlung anzusteuern und anhand einer Zeitdauer zwischen dem Aussenden optischer Strahlung und dem Empfang des entsprechenden Messsignals durch den mindestens einen optischen Empfänger den Füllstand der mindestens einen Münztube (10) mit Münzen (12) zu bestimmen, **dadurch gekennzeichnet, dass** die Vorrichtung zur Bestimmung des Füllstands einer Mehrzahl von mit Münzen befüllbaren Münztuben vorgesehen ist, wobei für eine Mehrzahl der Münztuben oder sämtliche Münztuben ein gemeinsamer optischer Strahlungssender und/oder ein gemeinsamer optischer Strahlungsempfänger vorgesehen ist, wobei der gemeinsame optische Strahlungssender und/oder der gemeinsame optische Strahlungsempfänger über einen Lichtwellenleiter mit den Münztuben optisch verbunden ist.

2. Vorrichtung nach Anspruch 1, **dadurch gekennzeichnet, dass** der mindestens eine optische Strahlungssender mindestens ein Laser ist und dass der mindestens eine optische Strahlungsempfänger mindestens ein Laserdetektor ist.

3. Vorrichtung nach einem der vorhergehenden Ansprüche, **dadurch gekennzeichnet, dass** die Steuer- und Auswerteeinrichtung (24) den mindestens einen optischen Strahlungssender ein- oder mehrmals zum Aussenden optischer Strahlungspulse ansteuert.

4. Vorrichtung nach einem der vorhergehenden Ansprüche, **dadurch gekennzeichnet, dass** der mindestens eine optische Strahlungssender derart relativ zu der mindestens einen Münztube (10) angeordnet ist, dass die von dem mindestens einen optischen Strahlungssender ausgesendete optische Strahlung im Wesentlichen in Axialrichtung der mindestens einen Münztube (10) auf in die Münztube (10) gefüllte Münzen (12) trifft, und dass der mindestens eine optische Strahlungsempfänger derart relativ zu der mindestens einen Münztube (10) angeordnet ist, dass die von den in die Münztube (10) gefüllten Münzen (12) reflektierte optische Strahlung im Wesentlichen in Axialrichtung der mindestens einen Münztube (10) auf den optischen Strahlungsempfänger trifft.

5. Vorrichtung nach einem der vorhergehenden Ansprüche, **dadurch gekennzeichnet, dass** sie eine Mehrzahl optischer Strahlungssender und eine Mehrzahl optischer Strahlungsempfänger umfasst, wobei jeweils ein Paar aus Strahlungssender und Strahlungsempfänger jeweils einer von mehreren Münztuben (10) zugeordnet ist, wobei die optischen Strahlungssender jeweils in einer definierten Position relativ zu der jeweiligen Münztube (10) derart angeordnet sind, dass von den optischen Strahlungssendern jeweils ausgesendete optische Strahlung auf in die jeweilige Münztube (10) gefüllte Münzen (12) trifft und von in die jeweilige Münztube (10) gefüllten Münzen (12) reflektiert wird, und wobei die optischen Strahlungsempfänger jeweils in einer definierten Position relativ zu der jeweiligen Münztube (10) derart angeordnet sind, dass von dem jeweiligen optischen Strahlungssender ausgesendete und von in die jeweilige Münztube (10) gefüllten Münzen (12) reflektierte optische Strahlung von dem jeweiligen optischen Strahlungsempfänger als Messsignal empfangen wird, und wobei die Steuer- und Auswerteeinrichtung (24) mit jedem Strahlungssender und jedem Strahlungsempfänger verbunden ist und dazu ausgebildet ist, die optischen Strahlungssender jeweils zum Aussenden optischer Strahlung anzusteuern und anhand einer Zeitdauer zwischen dem Aussenden optischer Strahlung durch den jeweiligen optischen Strahlungssender und dem Empfang des entsprechenden Messsignals durch den jeweiligen optischen Empfänger den Füllstand der jeweiligen Münztube (10) mit Münzen (12) zu bestimmen.

6. Münzspeichervorrichtung zum Speichern und/oder Auszahlen von Münzen, umfassend mehrere mit Münzen (12) befüllbare Münztuben (10) und umfassend eine Vorrichtung nach einem der vorhergehenden Ansprüche.

7. Münzspeichervorrichtung nach Anspruch 6, **dadurch gekennzeichnet, dass** sie eine Mehrzahl von Münztuben (10) und eine Vorrichtung nach Anspruch 1 oder Anspruch 5 umfasst, und dass die Steuer- und Auswerteeinrichtung (24) anhand von mit der Vorrichtung für die einzelnen Münztuben (10) bestimmten Füllständen eine Auszahlung von Münzen (12) aus den Münztuben (10) derart ausführt, dass die Füllstände in den Münztuben (10) einen jeweils vorgegebenen Minimalwert nicht unterschreiten.

8. Verfahren zur Bestimmung des Füllstands mindestens einer mit Münzen befüllbaren Münztube, bei dem von einem in einer definierten Position relativ zu der mindestens einen Münztube (10) angeordneten optischen Strahlungssender optische Strahlung auf in die mindestens eine Münztube (10) gefüllte Münzen (12) ausgesendet und von in die mindestens eine Münztube (10) gefüllten Münzen (12) reflektiert wird, bei dem weiterhin von mindestens einem in einer definierten Position relativ zu der mindestens einen Münztube (10) angeordneten optischen Strahlungsempfänger die von dem mindestens einen optischen Strahlungssender ausgesendete und von in die mindestens eine Münztube (10) gefüllten Münzen (12) reflektierte optische Strahlung als Messsignal empfangen wird, und bei dem anhand einer Zeitdauer zwischen dem Aussenden optischer Strahlung durch den mindestens einen optischen Strahlungssender und dem Empfang des entsprechenden Messsignals durch den mindestens einen optischen Empfänger der Füllstand der mindestens einen Münztube (10) mit Münzen (12) bestimmt wird, **dadurch gekennzeichnet, dass** der Füllstand einer Mehrzahl von mit Münzen befüllbaren Münztuben bestimmt wird, wobei für eine Mehrzahl der Münztuben oder sämtliche Münztuben ein gemeinsamer optischer Strahlungssender und/oder ein gemeinsamer optischer Strahlungsempfänger verwendet wird, wobei der gemeinsame optische Strahlungssender und/oder der gemeinsame optische Strahlungsempfänger über einen Lichtwellenleiter mit den Münztuben optisch verbunden ist.

9. Verfahren nach Anspruch 8, **dadurch gekennzeichnet, dass** der mindestens eine optische Strahlungssender ein- oder mehrmals einen optischen Strahlungspuls aussendet.

10. Verfahren nach einem der Ansprüche 8 oder 9, **dadurch gekennzeichnet, dass** die von dem mindestens einen optischen Strahlungssender ausgesendete optische Strahlung im Wesentlichen in Axialrichtung der mindestens einen Münztube (10) auf in die Münztube (10) gefüllte Münzen (12) trifft, und dass die von den in die Münztube (10) gefüllten Münzen (12) reflektierte optische Strahlung im Wesentlichen in Axialrichtung der mindestens einen Münztube (10) auf den optischen Strahlungsempfänger trifft.

11. Verfahren nach einem der Ansprüche 8 bis 10, **dadurch gekennzeichnet, dass** eine Mehrzahl optischer Strahlungssender und eine Mehrzahl optischer Strahlungsempfänger verwendet wird, wobei jeweils ein Paar aus Strahlungssender und Strahlungsempfänger jeweils einer von mehreren Münztuben (10) zugeordnet ist, wobei die optischen Strahlungssender jeweils in einer definierten Position relativ zu der jeweiligen Münztube (10) angeordnet sind, und wobei die optischen Strahlungsempfänger jeweils in einer definierten Position relativ zu der jeweiligen Münztube (10) angeordnet sind, wobei von den optischen Strahlungssendern jeweils optische Strahlung ausgesendet wird, auf in die jeweilige Münztube (10) gefüllte Münzen (12) trifft und von in die jeweilige Münztube (10) gefüllten Münzen (12) reflektiert wird, und wobei von dem jeweiligen optischen Strahlungssender ausgesendete und von in die jeweilige Münztube (10) gefüllten Münzen (12) reflektierte optische Strahlung von dem jeweiligen optischen Strahlungsempfänger als Messsignal empfangen wird, und wobei anhand einer Zeitdauer zwischen dem Aussenden optischer Strahlung durch den jeweiligen optischen Strahlungssender und dem Empfang des entsprechenden Messsignals durch den jeweiligen optischen Empfänger der Füllstand der jeweiligen Münztube (10) mit Münzen (12) bestimmt wird.

12. Verfahren nach einem der Ansprüche 8 bis 11, **dadurch gekennzeichnet, dass** anhand von für die Münztuben (10) jeweils bestimmten Füllständen eine Auszahlung von Münzen (12) aus den Münztuben (10) derart erfolgt, dass die Füllstände in den Münztuben (10) einen jeweils vorgegebenen Minimalwert nicht unterschreiten.

13. Verfahren nach einem der Ansprüche 8 bis 12, **dadurch gekennzeichnet, dass** es mit einer Vorrichtung nach einem der Ansprüche 1 bis 7 durchgeführt wird.

## Claims

1. An apparatus for determining the filling level of at least one coin tube fillable with coins, comprising:
at least one optical radiation transmitter, which is arranged in a defined position relative to the at least one coin tube (10), such that optical radiation emitted by the optical radiation transmitter hits the coins (12) filled into the at least one coin tube (10) and is reflected by coins (12) filled into the at least one coin tube (10), further comprising
at least one optical radiation receiver, which is arranged in a defined position relative to the at least one coin tube (10), such that optical radiation emitted by the at least one optical radiation transmitter and reflected by the coins (12) filled into the at least one coin tube (10) is received by the at least one optical radiation receiver as a measurement signal, and
comprising a control and evaluation device (24), which is connected to the at least one optical radiation transmitter and the at least one optical radiation receiver, and is configured to control the at least one optical radiation transmitter for emitting optical radiation, and on the basis of a time period between the emission of optical radiation and the reception of the corresponding measurement signal by the at least one optical receiver determining the filling level of the at least one coin tube (10) with coins (12), **characterized in that** the apparatus is provided for determining the filling level of a plurality of coin tubes fillable with coins, wherein a common optical radiation transmitter and/or a common optical radiation receiver is provided for a plurality of coin tubes or all coin tubes, wherein the common optical radiation transmitter and/or the common optical radiation receiver are optically connected to the coin tubes via an optical waveguide.

2. The apparatus of claim 1, **characterized in that** the at least one optical radiation transmitter is at least one laser and **in that** the at least one optical radiation receiver is at least one laser detector.

3. The apparatus of one of the preceding claims, **characterized in that** the control and evaluation device (24) controls the at least one optical radiation transmitter once or repeatedly for emitting optical radiation pulses.

4. The apparatus of one of the preceding claims, **characterized in that** the at least one optical radiation transmitter is arranged relative to the at least one coin tube (10), such that the optical radiation emitted by the at least one optical radiation transmitter hits the coins (12) filled into the coin tube (10) substantially in axial direction of the at least one coin tube (10), and **in that** the at least one optical radiation receiver is arranged relative to the at least one coin tube (10), such that the optical radiation reflected by the coins (12) filled into the at least one coin tube (10), hits the optical radiation receiver substantially in axial direction of the at least one coin tube (10).

5. The apparatus of one of the preceding claims, **characterized in that** a plurality of optical radiation transmitters and a plurality of optical radiation receivers, wherein a respective pair of radiation transmitter and radiation receiver is associated with a respective one of a plurality of coin tubes (10), wherein the optical radiation transmitters each are arranged in a defined position relative to the respective coin tube (10), such that optical radiation emitted by the respective optical radiation transmitters hits coins (12) filled into the respective coin tube (10) and is reflected by coins (12) filled into the respective coin tube (10), and wherein the optical radiation receivers each are arranged in a defined position relative to the respective coin tube (10), such that optical radiation emitted by the respective optical radiation transmitter and reflected by coins (12) filled into the respective coin tube (10), is received by the respective optical radiation receiver as measurement signal, and wherein the control and evaluation device (24) is connected to each radiation transmitter and to each radiation receiver, and is configured to control the respective optical radiation transmitter to emit optical radiation, and on the basis of a time period between the emission of optical radiation by the respective optical radiation transmitter and the reception of the corresponding measurement signal by the respective optical receiver determining the filling level of the respective coin tube (10) with coins (12).

6. A coin storage apparatus for storing and/or disbursing coins, comprising a plurality of coin tubes (10) fillable with coins (12) and comprising an apparatus of one of the preceding claims.

7. The coin storage apparatus of claim 6, **characterized in that** it comprises a plurality of coin tubes (10) and an apparatus of claim 1 or claim 5, and **in that** the control and evaluation device (24) disburses coins (12) from the coin tubes (10) based on the filling levels of the individual coin tubes (10) determined by the apparatus, such that the filling levels in the coin tubes (10) do not fall below a respective specified minimum value.

8. A method for determining the filling level of at least one coin tube fillable with coins, wherein optical radiation is emitted from an optical radiation transmitter arranged in a defined position relative to the at least one coin tube (10) onto coins (12) filled in the at least one coin tube (10) and is reflected by coins (12) filled in the at least one coin tube (10), in which, furthermore, the optical radiation emitted by the at least one optical radiation transmitter and reflected by coins (12) filled into the at least one coin tube (10), is received as measurement signal by at least one optical radiation receiver arranged in a defined position relative to the at least one coin tube (10), and in which the filling level of the at least one coin tube (10) with coins (12) is determined on the basis of a time period between the emission of optical radiation by the at least one optical radiation transmitter and the reception of the corresponding measurement signal by the at least one optical radiation receiver,
**characterized in that** the filling level of a plurality of coin tubes fillable with coins is determined, wherein a common optical radiation transmitter and/or a common optical radiation receiver is used for a plurality of the coin tubes or all coin tubes, wherein the common optical radiation transmitter and/or the common optical radiation receiver are optically connected to the coin tubes via an optical waveguide.

9. The method of claim 8, **characterized in that** the at least one optical radiation transmitter emits an optical radiation pulse once or repeatedly.

10. The method of one of claims 8 or 9, **characterized in that** the optical radiation emitted by the at least one optical radiation transmitter hits the coins (12) filled into the coin tube (10) substantially in axial direction of the at least one coin tube (10), and **in that** the optical radiation reflected by the coins (12) filled into the at least one coin tube (10), hits the optical radiation receiver substantially in axial direction of the at least one coin tube (10).

11. The method of one of claims 8 to 10, **characterized in that** a plurality of optical radiation transmitter and a plurality of optical radiation receiver are used, wherein a respective pair of radiation transmitter and radiation receiver is associated with a respective one of a plurality of coin tubes (10), wherein the optical radiation transmitters each are arranged in a defined position relative to the respective coin tube (10), and wherein the optical radiation receivers each are arranged in a defined position relative to the respective coin tube (10), wherein optical radiation is emitted by the respective optical radiation transmitters and is reflected by coins (12) filled into the respective coin tube (10), and wherein the optical radiation emitted by the respective optical radiation transmitter and reflected by coins (12) filled in the respective coin tube (10) is received by the respective optical radiation receiver as measurement signal, and wherein the filling level of the respective coin tube (10) with coins (12) is determined on the basis of a time period between the emission of optical radiation by the respective optical radiation transmitter and the reception of the corresponding measurement signal by the respective optical receiver.

12. The method of one of claims 8 to 11, **characterized in that** a disbursement of coins (12) from the coin tubes (10) is carried out on the basis of filling levels determined for the respective coin tubes (10), such that the filling levels in the coin tubes (10) do not fall below a respective specified minimum value.

13. The method of one of claims 8 to 12, characterized it is performed with an apparatus according to one of claims 1 to 7.

## Revendications

1. Dispositif pour déterminer le niveau de remplissage d'au moins un tube à pièces de monnaie pouvant être rempli avec des pièces de monnaie, comprenant au moins un émetteur de rayonnement optique, qui est disposé dans une position définie par rapport audit au moins un tube à pièces de monnaie (10), de telle manière qu'un rayonnement optique émis par l'émetteur de rayonnement optique arrive sur des pièces de monnaie (12) chargées dans ledit au moins un tube à pièces de monnaie (10) et soit réfléchi par des pièces de monnaie (12) chargées dans ledit au moins un tube à pièces de monnaie (10), comprenant en outre au moins un récepteur de rayonnement optique, qui est disposé dans une position définie par rapport audit au moins un tube à pièces de monnaie (10), de telle manière qu'un rayonnement optique émis par ledit au moins un émetteur de rayonnement optique et réfléchi par des pièces de monnaie (12) chargées dans ledit au moins un tube à pièces de monnaie (10) soit reçu comme signal de mesure par ledit au moins un récepteur de rayonnement optique, et comprenant un dispositif de commande et d'évaluation (24), qui est relié audit au moins un émetteur de rayonnement optique et audit au moins un récepteur de rayonnement optique, et qui est configuré pour ordonner audit au moins un émetteur de rayonnement optique d'émettre un rayonnement optique et pour déterminer à l'aide d'un intervalle de temps entre l'émission d'un rayonnement optique et la réception du signal de mesure correspondant par ledit au moins un récepteur optique le niveau de remplissage dudit au moins un tube à pièces de monnaie (10) avec des pièces de monnaie (12), **caractérisé en ce que** le dispositif est prévu pour la détermination du niveau de remplissage d'une multiplicité de tubes à pièces de monnaie pouvant être remplis avec des pièces de monnaie, dans lequel il est prévu un émetteur de rayonnement optique commun et/ou un récepteur de rayonnement optique commun pour une multiplicité des tubes à pièces de monnaie ou pour tous les tubes à pièces de monnaie, dans lequel l'émetteur de rayonnement optique commun et/ou le récepteur de rayonnement optique commun est/sont relié(s) optiquement aux tubes à pièces de monnaie par un guide d'ondes lumineuses.

2. Dispositif selon la revendication 1, **caractérisé en ce que** ledit au moins un émetteur de rayonnement optique est au moins un laser et **en ce que** ledit au moins un récepteur de rayonnement optique est au moins un détecteur laser.

3. Dispositif selon l'une quelconque des revendications précédentes, **caractérisé en ce que** le dispositif de commande et d'évaluation (24) ordonne une ou plusieurs fois audit au moins un émetteur de rayonnement optique d'émettre des impulsions de rayonnement optique.

4. Dispositif selon l'une quelconque des revendications précédentes, **caractérisé en ce que** ledit au moins un émetteur de rayonnement optique est disposé par rapport audit au moins un tube à pièces de monnaie (10) de telle manière que le rayonnement optique émis par ledit au moins un émetteur de rayonnement optique arrive essentiellement dans la direction axiale dudit au moins un tube à pièces de monnaie (10) sur les pièces de monnaie (12) chargées dans le tube à pièces de monnaie (10), et **en ce que** ledit au moins un récepteur de rayonnement optique est disposé par rapport audit au moins un tube à pièces de monnaie (10) de telle manière que le rayonnement optique réfléchi par des pièces de monnaie (12) chargées dans le tube à pièces de monnaie (10) arrive essentiellement dans la direction axiale dudit au moins un tube à pièces de monnaie (10) sur le récepteur de rayonnement optique.

5. Dispositif selon l'une quelconque des revendications précédentes, **caractérisé en ce qu'**il comprend une multiplicité d'émetteurs de rayonnement optique et une multiplicité de récepteurs de rayonnement optique, dans lequel chaque fois une paire composée d'un émetteur de rayonnement et d'un récepteur de rayonnement est respectivement associée à un de plusieurs tubes à pièces de monnaie (10), dans lequel les émetteurs de rayonnement optique sont chaque fois disposés dans une position définie par rapport au tube à pièces de monnaie respectif (10), de telle manière qu'un rayonnement optique respectivement émis par les émetteurs de rayonnement optique arrive sur des pièces de monnaie (12) chargées dans le tube à pièces de monnaie respectif (10) et soit réfléchi par des pièces de monnaie (12) chargées dans le tube à pièces de monnaie respectif (10), et dans lequel les récepteurs de rayonnement optique sont chaque fois disposés dans une position définie par rapport au tube à pièces de monnaie respectif (10), de telle manière qu'un rayonnement optique émis par l'émetteur de rayonnement optique respectif et réfléchi par des pièces de monnaie (12) chargées dans le tube à pièces de monnaie respectif (10) soit reçu comme signal de mesure par le récepteur de rayonnement optique respectif, et dans lequel le dispositif de commande et d'évaluation (24) est relié à chaque émetteur de rayonnement et à chaque récepteur de rayonnement et est configuré pour ordonner aux émetteurs de rayonnement optique respectivement d'émettre un rayonnement optique et pour déterminer à l'aide d'un intervalle de temps entre l'émission d'un rayonnement optique par l'émetteur de rayonnement optique respectif et la réception du signal de mesure correspondant par le récepteur optique respectif le niveau de remplissage du tube à pièces de monnaie respectif (10) avec des pièces de monnaie (12).

6. Dispositif de stockage de pièces de monnaie pour stocker et/ou prélever des pièces de monnaie, comprenant plusieurs tubes à pièces de monnaie (10) pouvant être remplis de pièces de monnaie (12) et comprenant un dispositif selon l'une quelconque des revendications précédentes.

7. Dispositif de stockage de pièces de monnaie selon la revendication 6, **caractérisé en ce qu'**il comprend une multiplicité de tubes à pièces de monnaie et un dispositif selon la revendication 1 ou la revendication 5, et **en ce que** le dispositif de commande et d'évaluation (24) effectue à l'aide de niveaux de remplissage déterminés avec le dispositif pour les tubes à pièces de monnaie individuels (10) un prélèvement de pièces de monnaie (12) hors des tubes à pièces de monnaie (10), de telle manière que les niveaux de remplissage dans les tubes à pièces de monnaie (10) ne descendent pas en dessous d'une valeur minimale chaque fois prédéterminée.

8. Procédé de détermination du niveau de remplissage d'au moins un tube à pièces de monnaie pouvant être rempli avec des pièces de monnaie, dans lequel un rayonnement optique est émis par un émetteur de rayonnement optique disposé dans une position définie par rapport audit au moins un tube à pièces de monnaie (10) sur des pièces de monnaie (12) chargées dans ledit au moins un tube à pièces de monnaie (10) et est réfléchi par des pièces de monnaie (12) chargées dans ledit au moins un tube à pièces de monnaie (10), dans lequel en outre le rayonnement optique émis par ledit au moins un émetteur de rayonnement optique et réfléchi par des pièces de monnaie (12) chargées dans ledit au moins un tube à pièces de monnaie (10) est reçu comme signal de mesure par au moins un récepteur de rayonnement optique disposé dans une position définie par rapport audit au moins un tube à pièces de monnaie (10), et dans lequel on détermine à l'aide d'un intervalle de temps entre l'émission d'un rayonnement optique par ledit au moins un émetteur de rayonnement optique et la réception du signal de mesure correspondant par ledit au moins un récepteur optique le niveau de remplissage dudit au moins un tube à pièces de monnaie (10) avec des pièces de monnaie (12), **caractérisé en ce que** l'on détermine le niveau de remplissage d'une multiplicité de tubes à pièces de monnaie (10) pouvant être remplis avec des pièces de monnaie, dans lequel on utilise pour une multiplicité des tubes à pièces de monnaie ou pour tous les tubes à pièces de monnaie un émetteur de rayonnement optique commun et/ou un récepteur de rayonnement optique commun, dans lequel l'émetteur de rayonnement optique commun et/ou le récepteur de rayonnement optique commun est/sont relié(s) optiquement aux tubes à pièces de monnaie par un guide d'ondes lumineuses.

9. Procédé selon la revendication 8, **caractérisé en ce que** ledit au moins un émetteur de rayonnement optique émet une ou plusieurs fois une impulsion de rayonnement optique.

10. Procédé selon une des revendications 8 ou 9, **caractérisé en ce que** le rayonnement optique émis par ledit au moins un émetteur de rayonnement optique arrive essentiellement dans la direction axiale dudit au moins un tube à pièces de monnaie (10) sur des pièces de monnaie (12) chargées dans le tube à pièces de monnaie (10), et **en ce que** le rayonnement optique réfléchi par les pièces de monnaie (12) chargées dans le tube à pièces de monnaie (10) arrive essentiellement dans la direction axiale dudit au moins un tube à pièces de monnaie (10) sur le récepteur de rayonnement optique.

11. Procédé selon l'une quelconque des revendications 8 à 10, **caractérisé en ce que** l'on utilise une multiplicité d'émetteurs de rayonnement optique et une multiplicité de récepteurs de rayonnement optique, dans lequel chaque fois une paire composée d'un émetteur de rayonnement et d'un récepteur de rayonnement est respectivement associée à un de plusieurs tubes à pièces de monnaie (10), dans lequel les émetteurs de rayonnement optique sont chaque fois disposés dans une position définie par rapport au tube à pièces de monnaie respectif (10), et dans lequel les récepteurs de rayonnement optique sont chaque fois disposés dans une position définie par rapport au tube à pièces de monnaie respectif (10), dans lequel un rayonnement optique est émis respectivement par les émetteurs de rayonnement optique, arrive sur des pièces de monnaie (12) chargées dans le tube à pièces de monnaie respectif (10) et est réfléchi par des pièces de monnaie (12) chargées dans le tube à pièces de monnaie respectif (10), et dans lequel le rayonnement optique émis par l'émetteur de rayonnement optique respectif et réfléchi par des pièces de monnaie (12) chargées dans le tube à pièces de monnaie respectif (10) est reçu comme signal de mesure par le récepteur de rayonnement optique respectif, et dans lequel on détermine à l'aide d'un intervalle de temps entre l'émission d'un rayonnement optique par l'émetteur de rayonnement optique respectif et la réception du signal de mesure correspondant par le récepteur optique respectif le niveau de remplissage du tube à pièces de monnaie respectif (10) avec des pièces de monnaie (12).

12. Procédé selon l'une quelconque des revendications 8 à 11, **caractérisé en ce que** l'on effectue, à l'aide de niveaux de remplissage respectivement déterminés pour les tubes à pièces de monnaie (10), un prélèvement de pièces de monnaie (12) hors des tubes à pièces de monnaie (10), de telle manière que les niveaux de remplissage dans les tubes à pièces de monnaie (10) ne descendent pas en dessous d'une valeur minimale chaque fois prédéterminée.

13. Procédé selon l'une quelconque des revendications 8 à 12, **caractérisé en ce qu'**il est exécuté avec un dispositif selon l'une quelconque des revendications 1 à 7.
